# FASCICULE DE BREVET EUROPEEN

(11) **EP 2 715 631 B1**
(45) Date de publication et mention de la délivrance du brevet: **25.11.2020**
(21) Numéro de dépôt: 12731059.7
(22) Date de dépôt: 24.05.2012
(51) Int. Cl.: G06Q 20/12, G06Q 20/32, G07F 7/10, G06Q 20/40, G06Q 30/06

(54) **PROCEDE DE PAIEMENT A DISTANCE, A PARTIR D'UN DISPOSITIF UTILISATEUR, D'UN PANIER D'ACHAT SUR UN SERVEUR MARCHAND ET SYSTEME ASSOCIE**
VERFAHREN FÜR FERNZAHLUNG EINES EINKAUFSWAGENS VON EINEM BENUTZERGERÄT AUS AUF EINEM E-COMMERCE-SERVER UND ENTSPRECHENDES SYSTEM
METHOD FOR REMOTE PAYMENT, FROM A USER DEVICE, OF A SHOPPING CART ON AN E-COMMERCE SERVER AND ASSOCIATED SYSTEM

(30) Priorité: 25.05.2011 FR 1154551
(43) Date de publication de la demande: 09.04.2014
(73) Titulaire: ORANGE, 75015 Paris (FR)
(72) Inventeur: MASSIERE, Olivier, 75013 Paris (FR); ROUSSEL, Thibaut, F-92130 Issy Les Moulineaux (FR); DUBOIS, Pierre-François, F-92330 Sceaux (FR); GRUSON, Olivier, F-14790 Fontaine-Etoupefour (FR)
(86) Numéro de dépôt international: PCT/FR2012/051171
(87) Numéro de publication internationale: WO 2012/160318

(56) Documents cités:
- WO-A1-2011/056156

## Description

La présente invention se situe dans le domaine du paiement en ligne, et plus particulièrement dans le domaine du paiement en ligne à partir d'un dispositif utilisateur connecté à un réseau de téléphonie mobile.

Il existe trois principales solutions de paiement en ligne à partir d'un dispositif utilisateur mobile :
- le paiement à partir d'une carte bancaire, nécessitant de saisir des coordonnées bancaires (numéro de carte, date de validité et code de pictogramme) sur un site ou au sein d'une application mobile, à chaque transaction, à l'aide du terminal ;
- le paiement via un compte préalablement ouvert auprès d'un site marchand ou de paiement tel que PayPal, iTunes, Amazon Payments, etc., qui nécessite de communiquer au site marchand ou de paiement des coordonnées bancaires, généralement des coordonnées de carte bancaire, lors de l'ouverture du compte, et fonctionne avec un système de login et de mot de passe à saisir lors de chaque transaction.
- le paiement sur facture d'un opérateur mobile, effectué par débit directement sur la facture mobile du client auprès de son opérateur mobile.

Parmi ces trois principales solutions, celle de paiement sur facture mobile est particulièrement appréciée des utilisateurs pour sa simplicité d'usage.

Cette solution de paiement sur facture mobile fonctionne à partir d'un terminal mobile, par exemple un terminal de type "smartphone", connecté à un réseau mobile. Le terminal mobile doit être équipé d'un navigateur web et s'être préalablement inscrit auprès de son opérateur mobile à un service de paiement sur facture mobile.

Le paiement d'un panier d'achat sur un site web marchand, à l'aide d'un terminal mobile d'utilisateur et en utilisant la solution de paiement sur facture mobile, se déroule de la manière suivante :
L'utilisateur, à l'aide de son terminal mobile, navigue sur le site marchand, réalise un panier d'achat, contenant un ou plusieurs produit(s) à acheter, puis sélectionne, généralement parmi plusieurs modes de paiement proposés par le site marchand, celui de paiement sur facture mobile, en cliquant sur un élément de la page web. Suite à la sélection du paiement sur facture mobile, le navigateur du terminal mobile est redirigé par le site marchand vers une page d'un site web de paiement.

Lors de la redirection, le terminal mobile adresse au site de paiement une requête contenant une demande d'autorisation de paiement contenant des données de transaction (montant, date/heure et identifiant de transaction). Lors de sa transmission à travers le réseau mobile, la requête de demande d'autorisation de paiement est enrichie de données d'identification du terminal mobile, typiquement le MSISDN (Mobile Station Integrated Services Digital Network) du terminal, par une plateforme du réseau mobile. Le MSISDN ou Mobile Station ISDN (Integrated Services Digital Network - Réseau Numérique à Intégration de Services) est le numéro « connu du public » d'identification du terminal mobile dans le réseau mobile. C'est cet identifiant, couramment appelé numéro de téléphone, qui doit être composé afin d'atteindre l'abonné.

En réponse à sa requête, le site de paiement transmet au terminal une page web de confirmation de paiement, que le terminal affiche et qui contient les données de la transaction et invite l'utilisateur à confirmer le paiement par un clic (par exemple par appui sur un bouton "confirmation" de la page web). Le clic de confirmation de paiement déclenche l'exécution de la transaction de paiement. Le site de paiement transmet alors la demande d'autorisation de paiement contenant les données de transaction et le MSISDN du terminal mobile vers une plateforme/entité de l'opérateur mobile. Sur réception de la demande d'autorisation de paiement, la plateforme de l'opérateur mobile identifie le terminal mobile, à l'aide du MSISDN reçu, puis vérifie s'il est inscrit au service de paiement sur facture mobile et si le montant de la transaction peut être autorisé. En cas de vérifications positives, la plateforme de l'opérateur mobile répond au site de paiement par l'envoi d'un message d'autorisation de paiement. Le site de paiement informe le site marchand que la transaction de paiement a réussi et transmet vers le numéro MSISDN du terminal mobile, à travers le réseau mobile, un message SMS de confirmation de paiement, indiquant que le paiement demandé a été autorisé.

Le parcours utilisateur lors d'un paiement sur facture mobile est apprécié par les utilisateurs pour sa simplicité d'usage. En effet, le paiement est réalisé en deux simples clics de l'utilisateur: un premier clic sur le site web marchand et un deuxième clic sur le site web de paiement.

La sécurité d'une telle solution de paiement repose sur le terminal mobile et sur l'hypothèse selon laquelle l'utilisateur du terminal mobile a préalablement activé une carte SIM de sécurité de son terminal à l'aide d'un code PIN de déblocage et éventuellement déverrouillé son terminal à l'aide d'un code supplémentaire de déverrouillage. Cependant, une telle sécurité est relativement limitée. En effet, lorsque la carte SIM est débloquée et le terminal mobile déverrouillé, toute personne autre que le propriétaire du terminal peut utiliser celui-ci pour payer des achats sur le site marchand en utilisant le mode de paiement sur facture mobile. Aussi, ce mode de paiement sur facture mobile n'est généralement utilisé que pour des micro-paiements, c'est-à-dire pour des paiements de faibles montants ne dépassant pas un maximum de l'ordre de quelques dizaines d'euros actuellement.

La publication brevet WO2011/056156A1 décrit un procédé de paiement par mobile sécurisé, dans lequel le terminal mobile est redirigé d'une page du serveur marchand vers une page de l'opérateur mobile afin d'effectuer un paiement.

Il existe donc un besoin pour une solution de paiement en ligne à partir d'un terminal connecté à un réseau de téléphonie mobile à la fois simple d'usage et présentant un niveau de sécurité accru permettant des paiements de montants plus élevés.

A cet effet, l'invention concerne un procédé de paiement à distance, à partir d'un dispositif utilisateur, d'un panier d'achat sur un serveur marchand, ledit dispositif utilisateur étant apte à se connecter à un réseau de téléphonie mobile et associé à un numéro d'identification dans ledit réseau de téléphonie mobile, dans lequel
a) le dispositif utilisateur sélectionne un mode de paiement du panier d'achat sur une première page du serveur marchand;
b) sur sélection du mode de paiement, le dispositif utilisateur envoie une requête de paiement vers un module de validation de paiement, la requête de paiement demandant une page d'affichage de données de transaction de paiement, ladite requête étant automatiquement enrichie par des données d'identification du dispositif utilisateur à partir desquelles le numéro d'identification dudit dispositif utilisateur dans le réseau de téléphonie mobile est déterminé,
c) le dispositif utilisateur reçoit un message de requête d'authentification locale en provenance du module de validation de paiement, adressé au numéro d'identification du dispositif dans le réseau de téléphonie mobile, à travers le réseau de téléphonie mobile, ledit message de requête comprenant des données de transaction de paiement,
d) suite à la réception du message de requête d'authentification locale, le dispositif utilisateur déclenche automatiquement l'exécution d'une opération d'authentification locale d'un utilisateur du dispositif utilisateur, au cours de laquelle, le dispositif utilisateur comprenant un module de sécurité mémorisant un code de service, le dispositif affiche une fenêtre de saisie du code de service contenant lesdites données de transaction, l'utilisateur saisit ledit code de service, le module de sécurité vérifie le code de service saisi et, s'il est valide, génère un message de réponse indiquant que l'authentification a réussi et comprenant lesdites données de transaction, le message de réponse étant chiffré à destination du module de validation de paiement,
e) le dispositif utilisateur envoie au module de validation de paiement ledit message de réponse,
f) le dispositif utilisateur est redirigé par le module de validation de paiement vers une deuxième page du serveur marchand indiquant le résultat de la transaction de paiement. par la réception en provenance du module de validation de paiement d'une réponse à ladite requête de paiement, indiquant que la page demandée a déménagé et est accessible auprès du serveur marchand à une adresse pointant vers la deuxième page, la réponse comprenant les données de transaction chiffrées par le module de validation de paiement et à destination du serveur marchand,
g) le dispositif utilisateur transmet au serveur marchand une requête d'obtention de la deuxième page, ladite requête comprenant lesdites données de transaction chiffrées à destination du serveur marchand.

Selon l'invention, la sélection du mode de paiement sur la première page du serveur marchand, réalisée par exemple par un simple clic, déclenche, au niveau du dispositif utilisateur :
- d'abord une authentification locale de l'utilisateur,
- puis un basculement du dispositif utilisateur sur une deuxième page du serveur marchand indiquant le résultat de la transaction de paiement (succès ou échec).

Ainsi, du point de vue de l'utilisateur, le parcours de paiement comprend les trois étapes suivantes :
- sélection du mode de paiement sur une première page du serveur marchand;
- authentification locale et
- prise de connaissance du résultat de la transaction de paiement sur une deuxième page du serveur marchand.

Le processus de paiement est partiellement transparent du point de vue de l'utilisateur : le dispositif utilisateur n'affiche que des pages du serveur marchand, du début à la fin du parcours de paiement, sans redirection vers une page du module de validation de paiement, et il réalise une authentification locale au niveau de son dispositif.

L'authentification locale non seulement confère au paiement un niveau de sécurité accru mais permet également d'obtenir une confirmation de paiement de la part de l'utilisateur. Elle joue donc un double rôle de confirmation et de sécurisation du paiement. Grâce à cela, le parcours de paiement semble extrêmement simplifié pour l'utilisateur.

Le procédé de paiement est donc à la fois simple, rapide et très sécurisé. La combinaison d'une identification automatique du dispositif utilisateur dans le réseau mobile, sans nécessité pour l'utilisateur de saisir son numéro d'identification mobile, et d'une authentification locale déclenchée grâce à cette identification dans le réseau mobile, permet d'obtenir un parcours utilisateur à la fois simple et sécurisé.

Dans un premier mode particulier de réalisation, lesdites données d'identification du dispositif utilisateur sont ajoutées à la requête de paiement émise par le dispositif utilisateur par une entité du réseau de téléphonie mobile. Dans ce cas, c'est une entité du réseau mobile, typiquement une plateforme de l'opérateur mobile placée en coupure des flux de données émis par le dispositif utilisateur, connaissant le dispositif utilisateur connecté, qui insère dans la requête de paiement les données d'identification du dispositif utilisateur.

Dans ce cas, le dispositif utilisateur peut comprendre un terminal mobile et un module de sécurité associé audit terminal mobile et c'est ledit terminal mobile et ledit module de sécurité qui mettent en œuvre les étapes a) à f).

Dans ce premier mode de réalisation, l'utilisateur réalise l'intégralité de son parcours de paiement sur son terminal mobile et c'est une plateforme du réseau mobile qui fournit les données d'identification du terminal mobile au module de validation de paiement.

Dans un deuxième mode de réalisation, les données d'identification du dispositif utilisateur sont fournies par le serveur marchand avec la première page puis automatiquement insérées par le dispositif utilisateur dans la requête de paiement adressée au module de validation de paiement.

Dans ce cas, le dispositif utilisateur peut comprendre un premier terminal de navigation, un deuxième terminal mobile et un module de sécurité associé au terminal mobile, le premier terminal de navigation mettant en œuvre les étapes a), b) et f) et le deuxième terminal et le module de sécurité associé mettant en œuvre les étapes c), d) et e).

Selon le deuxième mode de réalisation, le parcours utilisateur de paiement s'effectue sur deux terminaux, l'un de navigation et l'autre de téléphonie mobile. Du point de vue de l'utilisateur, le parcours comprend la sélection du mode de paiement sur une première page du serveur marchand et la prise de connaissance du résultat de la transaction de paiement sur une deuxième page du serveur marchand, réalisées sur le terminal de navigation. L'utilisateur n'utilise son terminal mobile que pour réaliser une authentification locale entre l'affichage de la première et de la deuxième page du serveur marchand. Le parcours utilisateur de paiement reste donc très simple.

L'invention concerne aussi un système de paiement à distance d'un panier d'achat, comprenant
- un dispositif utilisateur, apte à être connecté à un réseau de téléphonie mobile et associé à un numéro d'identification dans ledit réseau de téléphonie mobile,
- un serveur marchand et
- un module de validation de paiement,
adaptés pour mettre en œuvre les étapes du procédé précédemment défini.

On va maintenant décrire un mode de réalisation particulier du procédé de paiement à distance, à partir d'un dispositif utilisateur, de l'invention, et du système apte à mettre en œuvre ce procédé, en référence aux dessins annexés sur lesquels :
- la figure 1 représente les échanges réalisés entre différentes entités du système lors de la mise en œuvre du procédé selon un premier mode de réalisation particulier de l'invention;
- la figure 2 représente les échanges réalisés entre différentes entités du système lors de la mise en œuvre du procédé selon un deuxième mode de réalisation particulier de l'invention;
- la figure 3 représente des contenus successifs d'écran d'un terminal mobile lors d'un parcours utilisateur selon le premier mode de réalisation de la figure 1;
- la figure 4 représente un schéma bloc fonctionnel d'une carte de sécurité du dispositif utilisateur de la figure 1.

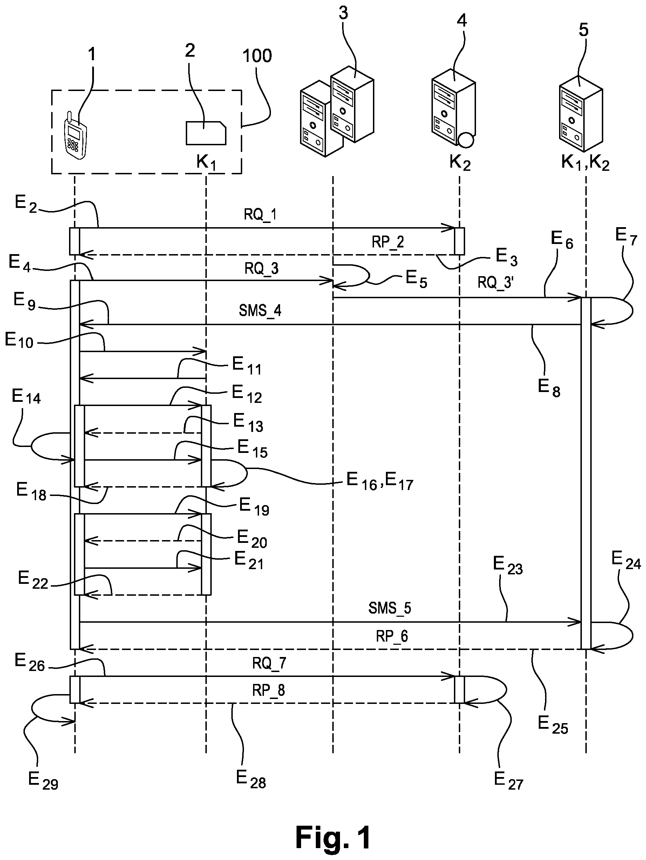

Sur la figure 1, on a représenté une succession d'étapes mises en œuvre lors d'un paiement d'un panier d'achat auprès d'un serveur marchand 4 par un dispositif utilisateur 100, dans un système, selon un premier mode de réalisation de l'invention.

Le système représenté sur la figure 1 comprend différentes entités listées ci-après:
- un dispositif utilisateur 100,
- une plateforme d'enrichissement 3 d'un réseau de communication mobile,
- un serveur marchand 4 et
- un module de validation de paiement 5.

Le dispositif utilisateur 100 comprend un terminal mobile 1 et un module de sécurité 2, ici une carte SIM.

Le terminal mobile 1 est ici un téléphone mobile. Il pourrait toutefois s'agir de tout autre type de terminal mobile apte à se connecter à un réseau de téléphonie mobile, par exemple une tablette électronique ayant des moyens d'accès à un réseau mobile. Le téléphone mobile 1 est apte à se connecter à un réseau de téléphonie mobile d'un opérateur de réseau mobile. Le terminal mobile 1 possède un numéro d'identification dans ce réseau de téléphonie mobile, également appelé MSISDN (Mobile Station Integrated Services Digital Network). Le MSISDN est le numéro « connu du public » d'identification du terminal mobile dans le réseau mobile. C'est cet identifiant, couramment appelé numéro de téléphone, qui est utilisé pour appeler le terminal mobile ou pour lui envoyer des messages tels que des SMS ou des MMS.

Le terminal mobile 1 est équipé d'un navigateur pour naviguer sur des sites d'un réseau informatique, ici l'Internet. L'accès du terminal mobile 1 à l'Internet se fait ici par l'intermédiaire du réseau de téléphonie mobile.

Le téléphone mobile 1 intègre la carte SIM de sécurité 2 qui est connectée au téléphone 1. Cette carte SIM 2 comprend
- des moyens 20 de stockage de codes de sécurité, ici un code PIN de déblocage de la carte et un code PIN de service;
- un premier module logiciel 21 d'authentification locale de déblocage de la carte;
- un deuxième module logiciel 22 d'authentification locale de service;
- un module logiciel de chiffrement/déchiffrement 23;
- un processeur 24 apte à exécuter les modules logiciels 21 et 22.

Par souci de clarté, seuls les éléments de la carte 2 nécessaires à la compréhension de l'invention sont ici décrits.

La plateforme d'enrichissement 3 est gérée par l'opérateur du réseau de téléphonie mobile et placée en coupure des flux de données émis par le terminal mobile 1, notamment lorsqu'il navigue sur l'Internet.

Le serveur marchand 4 héberge un site web marchand d'achat de produits et/ou de services.

Le module de validation de paiement 5 a pour rôle de valider un paiement lors de l'achat d'un panier sur le site marchand 4. Un panier, ou panier d'achat, désigne ici un ou plusieurs produit(s) et/ou service(s) qu'un utilisateur souhaite acheter sur le site marchand 4.

Le module de validation de paiement 5 et la carte SIM 2 partagent une clé, ici une clé secrète symétrique, notée K1. Cette clé K1 est mémorisée par les moyens de stockage 20 de la carte SIM 2 et dans une base de données du module de validation 5, en association avec un compte de l'utilisateur du dispositif 100 enregistré auprès du module 5 de validation de paiement.

Le serveur marchand 4 et le module de validation de paiement 5 partagent une clé secrète symétrique K2, mémorisée dans leurs bases de données respectives.

On va maintenant décrire, en référence à la figure 1, les étapes du procédé de paiement d'un panier d'achat sur le serveur marchand 4 à partir du terminal mobile 1.

Lors d'une étape préalable d'enregistrement E0 (non représentée), un utilisateur du terminal mobile 1 enregistre des coordonnées bancaires de paiement, par exemple des coordonnées de carte bancaire, auprès du module 5 de validation de paiement. La transmission des coordonnées bancaires au module de validation 5 peut se faire par exemple par connexion sécurisée à un site web hébergé par le module de validation 5 ou par courrier postal. Lors de cette étape d'enregistrement E0, la clé secrète K1 partagée entre le carte SIM 2 et le module de validation de paiement 5 peut être générée et enregistrée par la carte 2 et le module 5.

Lors d'une étape E1 (non représentée), le terminal mobile 1 navigue sur le site web du serveur marchand 4 et réalise un panier d'achat. Le panier d'achat peut contenir un ou plusieurs produits ou services que l'utilisateur du terminal mobile 1 souhaite acheter auprès du site marchand.

Lors d'une étape E2, le terminal mobile 1 transmet au serveur marchand 4 une requête, en l'espèce une requête http GET, référencée RQ_1 sur la figure 1, de demande d'une page de panier d'achat et de sélection d'un mode de paiement.

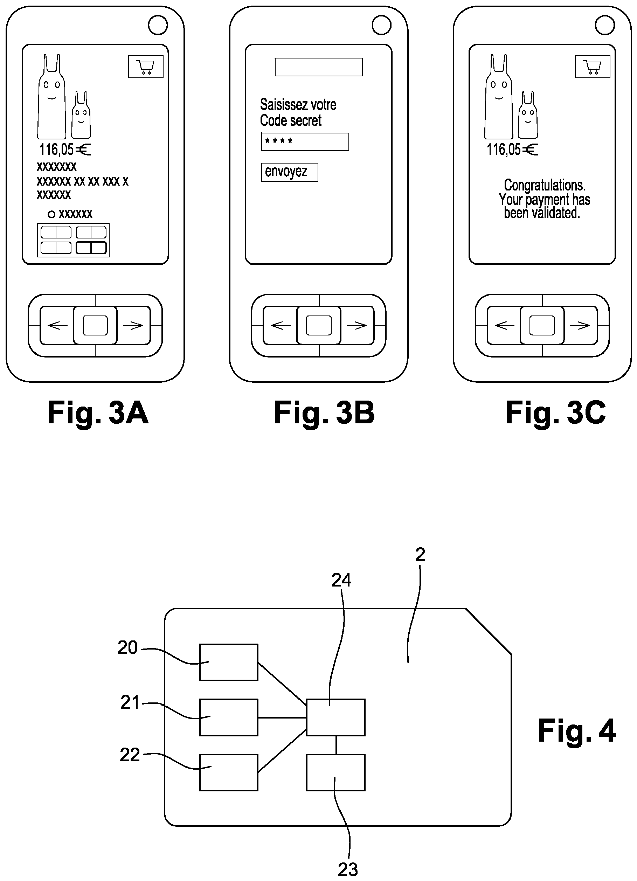

Lors d'une étape E3, en réponse à la requête RQ_1, le serveur marchand 4 transmet une réponse http de code "200 OK", référencée RP_2, contenant la page web de panier d'achat demandée lors de l'étape E2. Cette page web de panier d'achat, affichée par le terminal mobile 1 sur son écran, est représentée sur la figure 3A et contient
- des données de transaction de paiement du panier d'achat, comprenant le montant, la date et l'heure de la transaction, ainsi qu'un identifiant de transaction attribué par le serveur marchand 4 à la transaction de paiement considérée et
- des éléments, ici des icônes, de sélection d'un mode de paiement, comprenant en particulier un icône de sélection d'un mode de paiement par terminal mobile.

Lors d'une étape E4, sur sélection et validation par l'utilisateur du mode de paiement par téléphone mobile, le terminal mobile 1 émet une requête de paiement http GET, notée RQ_3, à destination du module 5 de validation de paiement et appelle un script gérant la validation du paiement. La requête de paiement RQ_3 contient les données de transaction (montant, date/heure et identifiant de la transaction).

La requête de paiement RQ_3 est dans un premier temps reçue par la plateforme d'enrichissement MNO 3, placée en coupure du flux de données émis par le terminal 1. Lors d'une étape E5, la plateforme 3 enrichit la requête RQ_3 en y ajoutant un numéro d'identification du terminal mobile 1 dans le réseau mobile, en l'espèce son MSISDN (Mobile Station Integrated Service Digital Network). A la place du MSISDN, la plateforme d'enrichissement 3 pourrait ajouter à la requête RQ_3 d'autres données d'identification, par exemple un alias d'identification. Cet alias d'identification peut être généré par l'opérateur du réseau mobile du dispositif utilisateur 1, à l'aide d'une fonction de génération d'alias et à partir du numéro d'identification MSISDN du dispositif utilisateur 1. L'alias ainsi généré est ensuite fourni au serveur marchand 4 et au module de validation de paiement 5. Dans ce cas, le module de validation 5 est équipé d'un module de calcul adapté pour calculer un numéro MSISDN à partir d'un alias d'identification, à l'aide d'une fonction inverse de la fonction de génération d'alias. En variante, on pourrait envisager de mémoriser dans une base de données du module de validation 5 l'alias et le MSISDN associé. En toute hypothèse, les données d'identification ajoutées dans la requête RQ_3 sont adaptées pour permettre, à partir de ces données d'identification, de déterminer le numéro d'identification du terminal mobile 1 dans le réseau mobile.

On soulignera que les données d'identification sont ajoutées dans la requête RQ_3 de façon automatique, sans saisie de ces données d'identification par l'utilisateur.

Lors d'une étape E6, la plateforme d'enrichissement 3 retransmet la requête enrichie, notée RQ_3', vers le module de validation de paiement 5.

Le module de validation 5 reçoit la requête enrichie RQ_3', obtient le numéro MSISDN du terminal mobile 1 par extraction de la requête RQ_3'. Dans le cas où la requête RQ_3' contient un alias d'identification, le module de validation 5 détermine le MSISDN à partir de l'alias.

Lors d'une étape E7, le module de validation de paiement 5 génère un message de requête d'authentification locale, adapté pour être transmis à travers le réseau mobile. Le message de requête d'authentification est ici un message SMS de commande, noté SMS_4. Il est adressé au module 22 d'authentification locale hébergée dans la carte SIM 2 du terminal mobile 1 et contient une requête d'authentification locale et les données de la transaction de paiement (montant, date/heure et identifiant de la transaction fournis par le serveur marchand 4). Le message SMS_4 est chiffré à l'aide de la clé secrète K1 partagée entre le module de validation 5 et la carte SIM 2. Le chiffrement du message de requête est destiné à permettre à la carte 2 de vérifier que la requête d'authentification provient bien du module de validation 5. En alternative au chiffrement symétrique, on pourrait envisager un chiffrement asymétrique ou une signature d'authentification.

Lors d'une étape E8, le module de validation 5 envoie, par l'intermédiaire d'un serveur d'envoi de SMS de l'opérateur mobile (non représenté), le message SMS_4 de requête d'authentification à destination du numéro MSISDN du terminal mobile 1.

Le message SMS_4 de requête d'authentification locale est reçu par le terminal mobile 1 à travers le réseau mobile, lors d'une étape E9.

D'emblée, on notera que les échanges entre le terminal mobile 1 et la carte SIM 2 sont chiffrés par une clé secrète partagée ou par un couple de clés asymétriques, de façon connue.

Le terminal mobile 1 transmet vers la carte SIM 2, à destination du module 22 d'authentification locale, le message SMS_4, lors d'une étape E10. Le message SMS_4 est déchiffré par le module de déchiffrement 23 de la carte 2 et le message SMS_4 déchiffré est fourni au module d'authentification locale 22. Sur réception de la requête d'authentification locale présente dans le message SMS_4, le module d'authentification 22 déclenche l'exécution d'une opération d'authentification locale décrite ci-après.

Lors d'une étape E11, la carte 2 transmet au terminal mobile 1 des valeurs "SW1 SW2" acquittant la bonne réception du message SMS_4 par la carte 2 et indiquant que le module d'authentification locale 22 souhaite envoyer une commande au terminal 1 grâce à une commande proactive. Lors d'une étape E12, le terminal mobile 1 transmet au module d'authentification locale 22 de la carte 2 une commande "FETCH" d'obtention de la commande à envoyer. En réponse, lors d'une étape E13, le module d'authentification locale 22 de la carte 2 transmet au terminal 1 une commande "GET INPUT " adaptée pour déclencher l'affichage sur l'écran du terminal 1 d'une fenêtre de saisie d'un code PIN de service contenant également les données de transaction, comme représenté sur la figure 3B.

Lors d'une étape E14, l'utilisateur du terminal mobile 1 saisit dans la fenêtre le code PIN de service demandé puis valide la saisie. Lors d'une étape E15, le terminal 1 transmet au module d'authentification locale 22 de la carte 2 un message de réponse contenant le code PIN de service saisi.

Lors d'une étape E16, le module d'authentification locale 23 vérifie le code PIN de service saisi, par comparaison avec celui stocké dans la carte 2.

Dans le cas où le code PIN de service saisi est incorrect, la carte 2 transmet un message d'erreur au terminal 1 invitant l'utilisateur à ressaisir le code PIN de service. Après un nombre prédéfini d'échecs de saisie du code PIN de service, l'authentification locale est bloquée. La carte SIM 2 génère alors un message SMS de réponse à la requête d'authentification locale, contenant les données de la transaction (montant, date/heure et identifiant de la transaction) et une indication "NOK" signalant que l'authentification locale a échoué. Ce message SMS est chiffré, ici à l'aide de la clé K1, puis transmis par l'intermédiaire du terminal 1 au module de validation de paiement 5 (comme décrit ci-après pour le message SMS_5).

Dans le cas où le code PIN de service saisi est correct, lors d'une étape E17, le module d'authentification locale 22 génère un message SMS de réponse à la requête d'authentification locale SMS_4, noté SMS_5. Le message SMS_5 contient les données de la transaction (montant, date/heure et identifiant de la transaction) et une indication "OK" signalant que l'authentification locale a réussie. Le message SMS_5 est chiffré ici à l'aide de la clé K1. On pourrait envisager de la chiffrer à l'aide d'une clé symétrique K1', connue de la carte 2 et du module de validation 5 mais différente de K1. A la place du chiffrement symétrique, on pourrait utiliser un chiffrement asymétrique ou une signature d'authentification.

Lors d'une étape E18, le module d'authentification 22 de la carte 2 transmet au terminal mobile 1 des valeurs "SW1 SW2" acquittant la bonne réception du message SMS_5 par la carte 2 et indiquant que le module d'authentification locale 22 souhaite envoyer une commande au terminal 1 grâce à une commande proactive. Lors d'une étape E19, le terminal mobile 1 transmet au module d'authentification locale 22 de la carte 2 une commande "FETCH" d'obtention de la commande à envoyer. En réponse, lors d'une étape E20, le module d'authentification locale 22 de la carte 2 transmet au terminal 1 une commande proactive "SEND SMS" afin d'envoyer le SMS_5, contenant le message sous forme chiffrée.

Le terminal 1 répond au module d'authentification 22 par un message d'acceptation "OK" signalant que le terminal 1 accepte d'envoyer le message SMS_5, lors d'une étape E21. Lors d'une étape E22, le module d'authentification 22 acquitte l'échange précédent en transmettant les valeurs SW1 et SW2 adéquates au terminal 1.

Lors d'une étape E23, en réponse au message SMS_4 préalablement reçu, le terminal 1 transmet au module de validation de paiement 5 le message SMS_5 sous forme chiffrée, à travers le réseau mobile.

Lors d'une étape E24, le module de validation reçoit et déchiffre le message SMS_5 (ou le message SMS contenant l'indication "NOK"), vérifie le résultat de l'authentification locale réalisée au niveau du terminal 1 et de la carte SIM 2 et re-chiffre les données de transaction (montant, date/heure et identifiant de transaction) à l'aide d'une clé secrète K2 partagée entre le module de validation 5 et le serveur marchand 4.

Lors d'une étape E25, le module de validation de paiement 5 transmet au terminal mobile 1 une réponse http de code "302 found", notée RP_6, contenant un lien URL de redirection vers une page du site web du serveur marchand 4 ainsi que les données de transaction chiffrées à l'aide de la clé K2. La réponse http "302 found" est une réponse à la requête http GET (RQ_3) d'obtention des données de transaction transmise par le terminal mobile 1 à destination du module de validation 5 lors de l'étape E3. Cette réponse RP_6 indique au navigateur web du terminal mobile 1 que la page web demandée au module de validation 5 dans la requête RQ_3 a déménagé et est accessible à une nouvelle adresse correspondant au lien URL présent dans la réponse RP_6, pointant vers une page du site web du serveur web marchand 4. Dans le cas d'une authentification locale réussie, il s'agit d'une page contenant un message indiquant que le paiement a été accepté. Dans le cas où l'authentification locale a échoué, il s'agit d'une page contenant un message indiquant que le paiement a échoué.

Lors d'une étape E26, le terminal mobile 1 transmet au serveur marchand 4 une requête http GET, notée RQ_7, d'obtention de la page web indiquée dans la réponse RP_6, en utilisant le lien URL présent dans cette réponse. La requête RQ_7 contient les données de transaction chiffrées à l'aide de la clé K2.

Lors d'une étape E27, le serveur marchand 4 déchiffre les données de transaction présentes dans la requête RQ_7, à l'aide de la clé secrète K2, et vérifie l'identifiant de transaction. Si l'identifiant de transaction correspond à celui de la transaction en cours avec le terminal mobile 1, le serveur marchand 4 valide l'acceptation du paiement et, lors d'une étape E28, transmet au terminal mobile 1 une réponse http de code "200 OK", notée RP_8, de commande d'affichage d'un message indiquant que le paiement a été accepté, par exemple "Félicitations. Votre paiement a été accepté."

Lors d'une étape E29, sur réception de la réponse RP_8, le terminal 8 affiche la page web du site du serveur marchand 4 contenant le message indiquant que le paiement a été accepté, comme représenté sur la figure 3C.

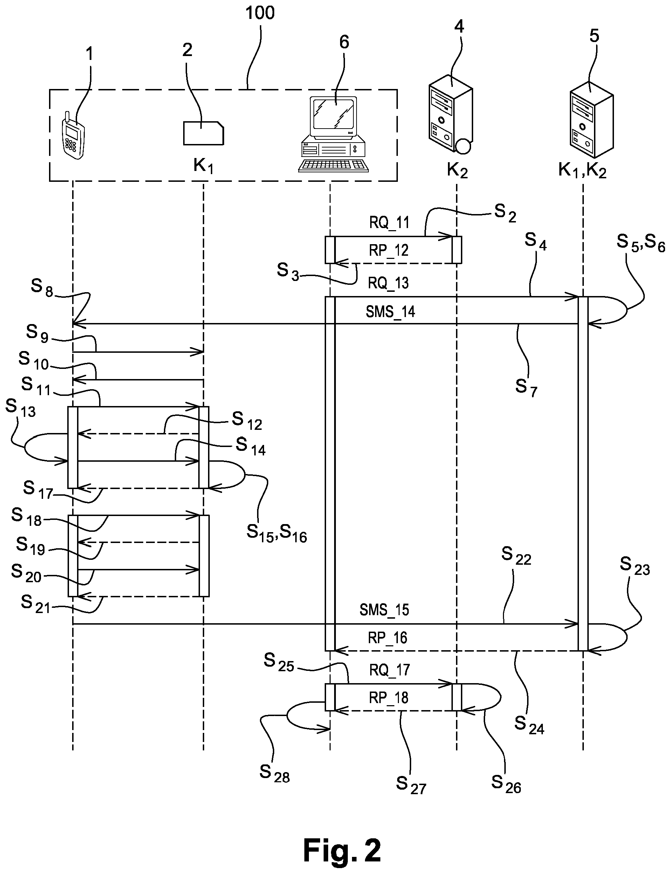

On va maintenant décrire, en référence à la figure 2, un deuxième mode de réalisation du procédé de paiement selon l'invention. Par souci de clarté, les éléments correspondants des premier et deuxième modes de réalisation portent les mêmes références.

Dans ce deuxième mode de réalisation, le dispositif utilisateur 100 comprend un terminal de navigation 6 et un terminal mobile 1 intégrant une carte de sécurité 2.

Le terminal de navigation 6 est ici un ordinateur comprenant un navigateur web.

Le terminal mobile 1 est analogue au terminal mobile 1 décrit en relation avec le premier mode de réalisation, à la différence qu'il peut ne pas intégrer de navigateur web.

La carte de sécurité 2 est identique à celle décrite en relation avec le premier mode de réalisation.

Lors d'une étape préalable d'enregistrement S0 (non représentée), un utilisateur du dispositif utilisateur 100 enregistre des coordonnées bancaires de paiement auprès du module 5 de validation de paiement, comme précédemment explicité en relation avec le premier mode de réalisation. Lors de cette étape d'enregistrement S0, la clé secrète K1 partagée entre le carte SIM 2 et le module de validation de paiement 5 peut être générée et enregistrée par la carte 2 et le module 5.

Lors d'une étape S1 (non représentée), le terminal de navigation 6 navigue sur le site web du serveur marchand 4 et réalise un panier d'achat. Lors de la navigation sur le site web du serveur marchand 4, le terminal de navigation 6 s'identifie auprès du serveur marchand 4. Le serveur marchand 4 comprend une base de données stockant des comptes d'utilisateur contenant des données personnelles d'utilisateur et des informations sur les commandes de l'utilisateur auprès du serveur marchand 4. Le compte de l'utilisateur du dispositif 100 contient notamment un alias d'identification associé au terminal mobile 1, à partir duquel le module de validation de paiement 5 peut déterminer le numéro d'identification MSISDN du terminal mobile 1. Comme précédemment explicité, cet alias d'identification est calculé à partir du numéro MSISDN.

Lors d'une étape S2, le terminal de navigation 6 transmet au serveur marchand 4 une requête, en l'espèce une requête http GET, référencée RQ_11 sur la figure 1, de demande d'une page de panier d'achat et de sélection d'un mode de paiement.

Lors d'une étape S3, en réponse à la requête RQ_11, le serveur marchand 4 transmet une réponse http de code "200 OK", référencée RP_12, contenant la page web de panier d'achat demandée lors de l'étape S2. Cette page web de panier d'achat, représenté sur la figure 3A, contient un lien, ici un lien URL, associé à un mode de paiement par terminal mobile. Le lien URL pointe vers le module de validation de paiement 5 et contient en paramètres d'URL les données de transaction de paiement du panier d'achat (montant, date/heure et identifiant de la transaction) et l'alias d'identification de l'utilisateur.

Lors d'une étape S4, sur sélection par l'utilisateur du mode de paiement par téléphone mobile et activation du lien URL correspondant dans la page de panier d'achat, le terminal de navigation 6 émet une requête http GET, notée RQ_13, de paiement à destination du module 5 de validation de paiement. La requête de paiement RQ_13 contient les données de transaction (montant, date/heure et identifiant de la transaction) ainsi que l'alias d'identification reçu et appelle un script gérant la validation du paiement. L'alias d'identification est ajouté dans la requête RQ_13 par le terminal de navigation 6, de façon automatique, sans saisie de données d'identification par l'utilisateur.

Lors d'une étape S5, le module de validation 5 reçoit la requête RQ_13 et détermine le numéro MSISDN du terminal mobile 1 à partir de l'alias d'identification présent dans la requête RQ_13.

Lors d'une étape S6, le module de validation 5 génère un message de requête d'authentification locale, adapté pour être transmis à travers le réseau mobile. Le message de requête d'authentification est ici un message SMS de commande, noté SMS_14. Il est adressé au module 22 d'authentification locale hébergé dans la carte SIM 2 du terminal mobile 1 et contient une requête d'authentification locale et les données de la transaction de paiement (montant de la transaction, date/heure de la transaction et identifiant de la transaction fournit par le serveur marchand 4). Le message SMS_4 est chiffré, par exemple à l'aide d'une clé secrète K1 partagée entre le module de validation 5 et la carte SIM 2. Le chiffrement du message de requête est destiné à permettre à la carte 2 de vérifier que le message SMS_4 de requête d'authentification locale provient bien du module de validation 5. A la place du chiffrement à l'aide d'une clé secrète symétrique, on pourrait envisager un chiffrement asymétrique ou une signature d'authentification. Lors d'une étape S7, le module de validation 5 envoie, par l'intermédiaire d'un serveur d'envoi de SMS de l'opérateur mobile, non représenté, le message SMS_14 de requête d'authentification locale à destination du numéro MSISDN du terminal mobile 1.

Les étapes suivantes S8 à S23, réalisées par le terminal mobile 1 et la carte SIM 2, sont identiques aux étapes E9 à E24 décrites en relation avec le premier mode de réalisation.

Lors d'une étape S24, le module de validation de paiement 5 transmet au terminal de navigation 6 une réponse http de code "302 found", notée RP_16, contenant un lien URL de redirection vers une page du site web du serveur marchand 4 ainsi que les données de transaction chiffrées à l'aide de la clé K2. La réponse http "302 found" est une réponse à la requête http GET (RQ_13) d'obtention des données de transaction transmise par le terminal mobile 1 à destination du module de validation 5 lors de l'étape S4. Cette réponse RP_16 indique au navigateur web du terminal mobile 1 que la page web demandée au module de validation 5 dans la requête RQ_13 a déménagé et est accessible à une nouvelle adresse correspondant au lien URL présent dans la réponse RP_16, pointant vers une page du site web du serveur web marchand 4.

Lors d'une étape S25, le terminal de navigation 6 transmet au serveur marchand 4 une requête http GET, notée RQ_17, d'obtention de la page web indiquée dans la réponse RP_16, en utilisant le lien URL présent dans cette réponse. La requête RQ_17 contient les données de transaction chiffrées à l'aide de la clé K2.

Lors d'une étape S26, le serveur marchand 4 déchiffre les données de transaction présentes dans la requête RQ_17, à l'aide de la clé secrète K2, et vérifie l'identifiant de transaction. Si l'identifiant de transaction correspond à celui de la transaction en cours avec le terminal mobile 1, le serveur marchand 4 valide l'acceptation du paiement et, lors d'une étape S27, transmet au terminal mobile 1 une réponse http de code "200 OK", notée RP_18, de commande d'affichage d'un message indiquant que le paiement a été accepté, par exemple "Félicitations. Votre paiement a été accepté."

Lors d'une étape S28, sur réception de la réponse RP_18, le terminal 8 affiche la page web du site du serveur marchand 4 contenant le message indiquant que le paiement a été accepté, comme représenté sur la figure 3C.

L'invention concerne aussi le système de paiement à distance d'un panier d'achat, comprenant
- le dispositif utilisateur 100, apte à être connecté à un réseau de téléphonie mobile et associé à un numéro d'identification dans ledit réseau de téléphonie mobile, et à naviguer sur des pages du serveur marchand,
- le serveur marchand 4 et
- le module de validation de paiement 5.

Dans le premier mode de réalisation, le dispositif utilisateur 100 comprend le terminal mobile 1 et la carte de sécurité 2, et le système comprend la plateforme d'enrichissement 3 du réseau mobile.

Dans le deuxième mode de réalisation, le dispositif utilisateur 100 comprend le terminal mobile 1, la carte de sécurité 2 et le terminal de navigation 6.

Les différentes entités du système sont adaptées pour mettre en œuvre les étapes du procédé précédemment décrites.

Dans la description qui précède, les clés K1 et K2 utilisées pour chiffrer certains échanges entre le module de validation de paiement 5 et, d'une part, la carte SIM 2 et, d'autre part, le serveur marchand 4, sont des clés de chiffrement/déchiffrement symétriques. De façon alternative, on pourrait utiliser un couple de clés asymétriques pour chiffrer et déchiffrer les échanges ou ajouter aux échanges des signatures d'authentification.

## Revendications

1. Procédé de paiement à distance, à partir d'un dispositif utilisateur, d'un panier d'achat sur un serveur marchand, ledit dispositif utilisateur étant apte à se connecter à un réseau de téléphonie mobile et associé à un numéro d'identification dans ledit réseau de téléphonie mobile, dans lequel
a) le dispositif utilisateur sélectionne un mode de paiement du panier d'achat sur une première page du serveur marchand;
b) sur sélection du mode de paiement, le dispositif utilisateur envoie une requête de paiement vers un module de validation de paiement, la requête de paiement demandant une page d'affichage de données de transaction de paiement, ladite requête étant automatiquement enrichie par des données d'identification du dispositif utilisateur à partir desquelles le numéro d'identification dudit dispositif utilisateur dans le réseau de téléphonie mobile est déterminé,
c) le dispositif utilisateur reçoit un message de requête d'authentification locale en provenance du module de validation de paiement, adressé au numéro d'identification du dispositif dans le réseau de téléphonie mobile, à travers le réseau de téléphonie mobile, ledit message de requête comprenant des données de transaction de paiement,
d) suite à la réception du message de requête d'authentification locale, le dispositif utilisateur déclenche automatiquement l'exécution d'une opération d'authentification locale d'un utilisateur du dispositif utilisateur, au cours de laquelle, le dispositif utilisateur comprenant un module de sécurité mémorisant un code de service, le dispositif affiche une fenêtre de saisie du code de service contenant lesdites données de transaction, l'utilisateur saisit ledit code de service, le module de sécurité vérifie le code de service saisi et, s'il est valide, génère un message de réponse indiquant que l'authentification a réussi et comprenant lesdites données de transaction, le message de réponse étant chiffré à destination du module de validation de paiement,
e) le dispositif utilisateur envoie au module de validation de paiement ledit message de réponse,
f) le dispositif utilisateur est redirigé par le module de validation de paiement vers une deuxième page du serveur marchand indiquant le résultat de la transaction de paiement par la réception en provenance du module de validation de paiement d'une réponse à ladite requête de paiement, indiquant que la page demandée a déménagé et est accessible auprès du serveur marchand à une adresse pointant vers la deuxième page, la réponse comprenant les données de transaction chiffrées par le module de validation de paiement et à destination du serveur marchand,
g) le dispositif utilisateur transmet au serveur marchand une requête d'obtention de la deuxième page, ladite requête comprenant lesdites données de transaction chiffrées à destination du serveur marchand.

2. Procédé selon la revendication 1, dans lequel lesdites données d'identification du dispositif utilisateur sont ajoutées à la requête de paiement émise par le dispositif utilisateur par une entité du réseau de téléphonie mobile.

3. Procédé selon la revendication 2, dans lequel le dispositif utilisateur comprend un terminal mobile et un module de sécurité associé audit terminal mobile et c'est ledit terminal mobile et ledit module de sécurité qui mettent en œuvre les étapes a) à f).

4. Procédé selon la revendication 1, dans lequel les données d'identification du dispositif utilisateur sont fournies par le serveur marchand avec la première page puis automatiquement insérées par le dispositif utilisateur dans la requête de paiement adressée au module de validation de paiement.

5. Procédé selon la revendication 4, dans lequel le dispositif utilisateur comprend un premier terminal de navigation, un deuxième terminal mobile et un module de sécurité associé au terminal mobile, le premier terminal de navigation mettant en œuvre les étapes a), b) et f) et le deuxième terminal et le module de sécurité associé mettant en œuvre les étapes c), d) et e).

6. Procédé selon la revendication 3 ou 5, dans lequel les données d'identification du dispositif utilisateur comprennent un numéro d'identification du terminal mobile dans le réseau de téléphonie mobile.

7. Procédé selon la revendication 3 ou 5, dans lequel les données d'identification du dispositif utilisateur comprennent un alias d'identification connu du serveur marchand et du module de validation de paiement.

8. Système de paiement à distance d'un panier d'achat, comprenant
- un dispositif utilisateur, apte à être connecté à un réseau de téléphonie mobile et associé à un numéro d'identification dans ledit réseau de téléphonie mobile,
- un serveur marchand et
- un module de validation de paiement,
adaptés pour mettre en œuvre les étapes du procédé selon la revendication 1.

## Patentansprüche

1. Verfahren zur Fernbezahlung eines Warenkorbs auf einem E-Commerce-Server von einem Benutzergerät, wobei das Benutzergerät geeignet ist, sich mit einem Mobilfunknetz zu verbinden und einer Identifikationsnummer in dem Mobilfunknetz zugeordnet ist, wobei
a) das Benutzergerät eine Zahlungsart des Warenkorbs auf einer ersten Seite des E-Commerce-Servers auswählt;
b) bei Auswahl der Zahlungsart das Benutzergerät eine Zahlungsanforderung an ein Zahlungsvalidierungsmodul sendet, wobei die Zahlungsanforderung eine Seite zur Anzeige von Zahlungstransaktionsdaten anfordert, wobei die Anforderung automatisch mit Identifikationsdaten des Benutzergeräts angereichert wird, anhand welcher die Identifikationsnummer des Benutzergeräts im Mobilfunknetz bestimmt wird,
c) das Benutzergerät eine Anforderungsnachricht für lokale Authentifizierung vom Zahlungsvalidierungsmodul, die an die Identifikationsnummer des Geräts im Mobilfunknetz gerichtet ist, durch das Mobilfunknetz empfängt, wobei die Anforderungsnachricht Zahlungstransaktionsdaten umfasst,
d) nach dem Empfang der Anforderungsnachricht für lokale Authentifizierung das Benutzergerät automatisch die Ausführung einer Operation einer lokalen Authentifizierung eines Benutzers des Benutzergeräts ausführt, im Verlauf welcher, das Benutzergerät umfassend ein Sicherheitsmodul, das einen Dienstcode speichert, das Gerät ein Fenster zur Eingabe des Dienstcodes mit den Transaktionsdaten anzeigt, der Benutzer den Dienstcode eingibt, das Sicherheitsmodul den eingegebenen Dienstcode überprüft, und, wenn er gültig ist, eine Antwortnachricht erzeugt, die angibt, dass die Authentifizierung erfolgreich war, und die Transaktionsdaten umfasst, wobei die Antwortnachricht an das Zahlungsvalidierungsmodul verschlüsselt wird,
e) das Benutzergerät die Antwortnachricht an das Zahlungsvalidierungsmodul sendet,
f) das Benutzergerät durch das Zahlungsvalidierungsmodul auf eine zweite Seite des E-Commerce-Servers weitergeleitet wird, der das Ergebnis der Zahlungstransaktion durch den Empfang, von dem Zahlungsvalidierungsmodul, einer Antwort auf die Zahlungsanforderung angibt, die angibt, dass die angeforderte Seite umgezogen ist und beim E-Commerce-Server auf einer Adresse abrufbar ist, die auf die zweite Seite zeigt, wobei die Antwort die Transaktionsdaten umfasst, die vom Zahlungsvalidierungsmodul verschlüsselt werden und für den E-Commerce-Server bestimmt sind,
g) das Benutzergerät an den E-Commerce-Server eine Anforderung zum Abruf der zweiten Seite überträgt, wobei die Anforderung die verschlüsselten Transaktionsdaten umfasst, die für den E-Commerce-Server bestimmt sind.

2. Verfahren nach Anspruch 1, wobei die Identifikationsdaten des Benutzergeräts der Zahlungsanforderung, die vom Benutzergerät gesendet wird, von einer Einheit des Mobilfunknetzes hinzugefügt werden.

3. Verfahren nach Anspruch 2, wobei das Benutzergerät ein mobiles Endgerät und ein Sicherheitsmodul, das dem mobilen Endgerät zugeordnet ist, umfasst, und das mobile Endgerät und das Sicherheitsmodul die Schritte a) bis f) durchführen.

4. Verfahren nach Anspruch 1, wobei die Identifikationsdaten des Benutzergeräts vom E-Commerce-Server mit der ersten Seite bereitgestellt, dann automatisch vom Benutzergerät in die Zahlungsanforderung eingefügt werden, die an das Zahlungsvalidierungsmodul gerichtet ist.

5. Verfahren nach Anspruch 4, wobei das Benutzergerät ein erstes Navigationsendgerät, ein zweites mobiles Endgerät und ein Sicherheitsmodul, das dem mobilen Endgerät zugeordnet ist, umfasst, wobei das erste Navigationsendgerät die Schritte a), b) und f) und das zweite Endgerät und das zugeordnete Sicherheitsmodul die Schritte c), d) und e) durchführen.

6. Verfahren nach Anspruch 3 oder 5, wobei die Identifikationsdaten des Benutzergeräts eine Identifikationsnummer des mobilen Endgeräts im Mobilfunknetz umfassen.

7. Verfahren nach Anspruch 3 oder 5, wobei die Identifikationsdaten des Benutzergeräts ein Identifikationsalias umfassen, das dem E-Commerce-Server und dem Zahlungsvalidierungsmodul bekannt ist.

8. System zur Fernbezahlung eines Warenkorbs, umfassend
- ein Benutzergerät, das geeignet ist, mit einem Mobilfunknetz verbunden und einer Identifikationsnummer in dem Mobilfunknetz zugeordnet zu sein,
- einen E-Commerce-Server und
- ein Zahlungsvalidierungsmodul,
die geeignet sind, die Schritte des Verfahrens nach Anspruch 1 durchzuführen.

## Claims

1. Method for remote payment, from a user device, for a shopping cart on an e-commerce server, said user device being able to connect to a mobile telephony network and associated with an identification number in said mobile telephony network, wherein
a) the user device selects a method of payment for the shopping cart on a first page of the e-commerce server;
b) on selection of the payment method, the user device sends a payment request to a payment validation module, the payment request requesting a page displaying payment transaction data, said request being automatically enriched with identification data of the user device from which the identification number of said user device in the mobile telephony network is determined,
c) the user device receives a local authentication request message from the payment validation module, addressed to the identification number of the device in the mobile telephony network, through the mobile telephony network, said request message comprising payment transaction data,
d) following the reception of the local authentication request message, the user device automatically triggers the execution of an operation of local authentication of a user of the user device, during which, the user device comprising a security module memorising a service code, the device displays a window for inputting the service code containing said transaction data, the user inputs said service code, the security module checks the input service code and, if it is valid, generates a response message indicating that the authentication has succeeded and comprising said transaction data, the response message being encrypted to the payment validation module,
e) the user device sends said response message to the payment validation module,
f) the user device is redirected by the payment validation module to a second page of the e-commerce server indicating the result of the payment transaction by the reception, from the payment validation module, of a response to said payment request, indicating that the requested page has moved and is accessible to the e-commerce server at an address pointing to the second page, the response comprising the transaction data encrypted by the payment validation module and intended for the e-commerce server,
g) the user device transmits a request to obtain the second page to the e-commerce server, said request comprising said encrypted transaction data intended for the e-commerce server.

2. Method according to Claim 1, wherein said identification data of the user device are added to the payment request transmitted by the user device by an entity of the mobile telephone network.

3. Method according to Claim 2, wherein the user device comprises a mobile terminal and a security module associated with said mobile terminal and it is said mobile terminal and said security module which implement the steps a) to f).

4. Method according to Claim 1, wherein the identification data of the user device are supplied by the e-commerce server with the first page then automatically inserted by the user device into the payment request addressed to the payment validation module.

5. Method according to Claim 4, wherein the user device comprises a first navigation terminal, a second mobile terminal and a security module associated with the mobile terminal, the first navigation terminal implementing the steps a), b) and f) and the second terminal and the associated security module implementing the steps c), d) and e).

6. Method according to Claim 3 or 5, wherein the identification data of the user device comprise an identification number of the mobile terminal in the mobile telephony network.

7. Method according to Claim 3 or 5, wherein the identification data of the user device comprise an identification alias known to the e-commerce server and to the payment validation module.

8. System for remote payment for a shopping cart, comprising
- a user device, which can be connected to a mobile telephony network and associated with an identification number in said mobile telephony network,
- an e-commerce server and
- a payment validation module,
suitable for implementing the steps of the method according to Claim 1.
